# EUROPÄISCHE PATENTSCHRIFT

(11) **EP 1 084 893 B1**
(45) Veröffentlichungstag und Bekanntmachung des Hinweises auf die Patenterteilung: **11.10.2006**
(21) Anmeldenummer: 00116854.1
(22) Anmeldetag: 04.08.2000
(51) Int. Cl.: B60K 37/02

(54) **Kombiinstrument**
Combined instrument
Instrument combiné

(30) Priorität: 13.09.1999 DE 19943571
(43) Veröffentlichungstag der Anmeldung: 21.03.2001
(73) Patentinhaber: SIEMENS AKTIENGESELLSCHAFT, 80333 München (DE)
(72) Erfinder: Simon, Ernst-Ulrich, 61440 Oberursel (DE); Kolibius, Hans, 64832 Babenhausen (DE); Nehm, Georg, 63843 Niedernberg (DE); Zech, Stephan, 65343 Eltville/Rhein (DE); Kronenberg, Hartmut, 26969 Butjadingen (DE)

(56) Entgegenhaltungen:
- EP-A- 0 478 218
- EP-A- 0 645 276
- WO-A-98/06594
- US-A- 4 025 896
- US-A- 5 003 433
- PATENT ABSTRACTS OF JAPAN vol. 1996, no. 09, 30. September 1996 (1996-09-30) & JP 08 129165 A (NIPPON SEIKI CO LTD), 21. Mai 1996 (1996-05-21)
- PATENT ABSTRACTS OF JAPAN vol. 016, no. 446 (M-1311), 17. September 1992 (1992-09-17) & JP 04 154436 A (HITACHI LTD), 27. Mai 1992 (1992-05-27)

## Beschreibung

Die Erfindung betrifft ein Kombiinstrument mit einem auf seiner Rückseite eine starre Leiterplatte tragenden Grundkörper, welches Anzeigebereiche aufweist, die mit unterschiedlichen Winkeln zueinander verlaufen und von denen zumindest einer gegenüber einem anderen Anzeigebereich ein abweichendes Höhenniveau hat.

Kombiinstrumente der vorstehenden Art sind in heutigen Kraftfahrzeugen vorgesehen und deshalb allgemein bekannt. Um unterschiedliche Anzeigen optimal in das Kombiinstrument zu integrieren, wird der zentrale Bereich des Zeigers eines Tachometers oftmals von einem Anzeigebereich abgedeckt, auf dem beispielsweise ein Display für ein Fahrzeugnavigationssystem angeordnet ist. Seitlich zu dem Tachometer sind häufig weitere, sekundäre Anzeigen vorgesehen, die in einem stumpfen Winkel zur Ebene des Tachometers verlaufen, damit sie vom Fahrer optimal abgelesen werden können. In unterschiedlichen Winkeln und mit unterschiedlichem Höhenniveau verlaufende Anzeigebereiche bedingen eine aufwendige Anordnung und Kontaktierung der unterschiedlichen elektrischen und elektronischen Bauteile des Kombiinstrumentes, so dass solche Kombiinstrumente wesentlich teurer sind als Kombiinstrumente, bei denen alle Anzeigen in einer Ebene ausgerichtet sind.

Aus der US-5003433 ist ein Kombiinstrument mit einem auf seiner Rückseite eine Stachelleiterplatte tragender Grundkörper bekannt. Dieses Kombiinstrument weist Anzeigebereiche auf. Auf der Vorderseite des Grundkörpers ist eine flexible Leiterplatte angeordnet, die einen in einem definierten Winkel zu einem Randbereich der Stachelleiterplatte umgelenkten Verbindungsbereich hat.

Der Erfindung liegt das Problem zugrunde, ein Kombiinstrument der eingangs genannten Art so zu gestalten, dass trotz unterschiedlicher Winkellagen und Ebenen der Anzeigebereiche die Anordnung und Kontaktierung der elektrischen und elektronischen Bauteile des Kombiinstrumentes möglichst einfach ist.

Dieses Problem wird erfindungsgemäß durch ein Kombiinstrument mit den Merkmalen des Patentanspruchs 1 gelöst. Der definierte Winkel kann beispielsweise etwa 180° betragen.

Die Montage der Einzelteile des Kombiinstrumentes ist erfindungsgemäß besonders einfach, da der Grundkörper einen quer zu seiner Haupterstreckungsebene verlaufenden Steg hat, an dessen freiem Ende ein Tragkörper für einen zweiten Anzeigebereich z. B. mittels eines Scharniers befestigt ist. Durch diese Gestaltung kann der Tragkörper zunächst eine Position einnehmen, in der er die Montage der Bauteile auf dem Grundkörper nicht behindert. Erst wenn der Grundkörper vollständig mit den von ihm zu tragenden Teilen bestückt ist, klappt man den Tragkörper auf den Grundkörper, so dass erst dann andere Anzeigeebenen, Positionen und/oder Winkellagen von z. B. auch anderen Elementen entstehen. Die Arretierung der Tragkörper erfolgt vorteilhafterweise durch Klipse.

Durch diese Aufteilung der Leiterplatte in eine starre Leiterplatte und eine flexible Leiterplatte lassen sich die erforderlichen elektronischen und elektrischen Bauteile optimal anordnen. Weiterhin können mit der flexiblen Leiterplatte problemlos auch diejenigen Bereiche des Kombiinstrumentes erreicht werden, die höhenversetzt und/oder winkelversetzt zur starren Leiterplatte bzw. dem Grundkörper des Kombiinstrumentes verlaufen.

Die Verbindung zwischen der starren Leiterplatte und der flexiblen Leiterplatte ist mit geringem Kostenaufwand herzustellen, wenn gemäß einer vorteilhaften Weiterbildung der Erfindung der Verbindungsbereich durch eine Bügellötung, Leitklebung oder Nullkraftstecker mit der starren Leiterplatte verbunden ist. Das gleiche erreicht man mit einer starr/flexiblen Leiterplatte.

Besonders kostengünstig ist das Kombiinstrument herzustellen, wenn gemäß einer anderen Weiterbildung der Erfindung das Scharnier des Tragkörpers ein Filmscharnier ist.

Der Tragkörper wird beim Verschwenken über den Grundkörper zwangsläufig in seiner parallel zum Grundkörper ausgerichteten Lage fixiert, wenn an der Rückseite des Tragkörpers zumindest ein quer zu seiner Haupterstreckungsrichtung ausgerichteter Rastkörper angeordnet ist und der Steg zumindest eine Raste zum Verrasten mit dem Rastkörper aufweist, sobald sich der Tragkörper in einer zum Grundkörper definierten Position befindet.

Die flexible Leiterplatte lässt sich auf dem Grundkörper und dem Tragkörper auf sehr einfache Weise positionieren, wenn die flexible Leiterplatte mehrere Durchbrechungen aufweist, durch welche jeweils ein vom Grundkörper oder dem Tragkörper vorspringender z. B. konischer Körper ragt. Dieser konische Körper ist vorteilhafterweise Bestandteil des Grundkörpers.

Die endgültige und dauerhafte Fixierung der flexiblen Leiterplatte kann ohne separate Fixierungsmittel erfolgen, wenn auf der flexiblen Leiterplatte Zeigerantriebe und/oder Lichtkästen angeordnet sind, die starr mit dem Grundkörper oder Tragkörper verbunden sind. Die Zeigerantriebe und/oder Lichtkästen können mit Rastfüßen durch die flexible Leiterplatte hindurchgreifen und im Grundkörper oder Tragkörper verrastet sein. Es können auch weitere Klipse zum Halten der flexiblen Leiterplatte Bestandteil des Grundkörpers oder Tragkörpers vorhanden sein. Schließlich können Zifferblätter auf die Lichtkästen und diese auf die flexible Leiterplatte drücken und so die flexible Leiterplatte auf den Grundkörper oder Rastkörper drücken.

Lötverbindungen für die Zeigerantriebe, und/oder andere Komponenten Lampen in den Lichtkästen können entfallen, wenn gemäß einer anderen Weiterbildung der Erfindung die Zeigerantriebe und/oder Lampen und/oder andere Komponenten federnde Kontakte aufweisen, welche im montierten Zustand federnd auf Leiterbahnen der flexiblen Leiterplatte aufliegen.

Der Zeigerantrieb für den Tachometer kann besonders einfach angeordnet werden und wird zur Fahrerseite hin abgedeckt, wenn auf der starren Leiterplatte ein Zeigerantrieb für ein Tachometer angeordnet ist und der Tragkörper im verrasteten Zustand einen den Zeigerantrieb aufweisenden Bereich abdeckt.

Für die Anordnung in einem Kraftfahrzeug ist es besonders zweckmäßig, wenn auf dem Tragkörper eine Flüssigkristallanzeige angeordnet ist, weil man dann die Möglichkeit erhält, beispielsweise ein Fahrzeugnavigationssystem für den Fahrer gut sichtbar in einem zentralen Bereich anzuordnen.

Ein weiterer Vorteil derartiger Aufbauten besteht darin daß die elektrische Verbindungstechnik von elektronischen Komponenten räumlich getrennt ist, was unter anderem folgende Vorteile bringt:
- Verbessertes EMV Verhalten durch optimale Anordnung der Komponenten.
- Leichtere Entflechtbarkeit des Layout's.
- Reduzierung der Fläche von kostenintensiven Leiterplatten.
- Änderung der Elektronik ohne Einflüsse auf mechanischen Aufbau (Design etc.).

Die Erfindung lässt verschiedene Ausführungsformen zu. Zur weiteren Verdeutlichung ihres Grundprinzips ist eine davon teilweise stark schematisch in der Zeichnung dargestellt und wird nachfolgend beschrieben. Die Zeichnung zeigt in
- Figur 1: einen Vertikalschnitt durch ein teilmontiertes Kombiinstrument nach der Erfindung,
- Figur 2: einen gegenüber Figur 1 im Maßstab vergrößerten Teilbereich des Kombiinstrumentes,
- Figur 3: einen weiteren Teilbereich des Kombiinstrumentes,
- Figur 4: eine Ansicht der starren und flexiblen Leiterplatte des Kombiinstrumentes im noch nicht montierten Zustand.

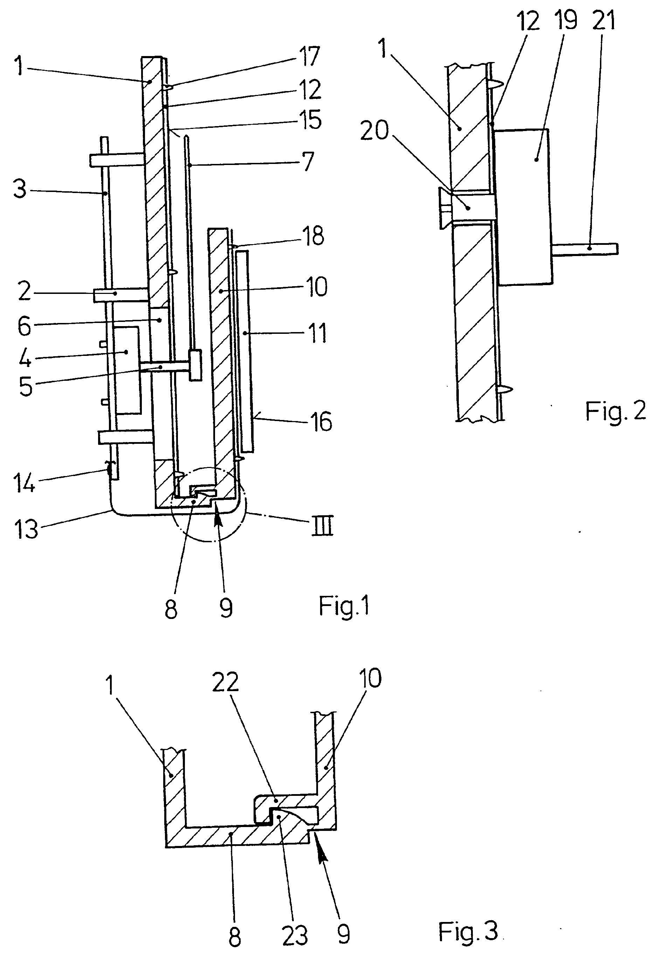

Die Figur 1 zeigt von einem Kombiinstrument einen Grundkörper 1 aus Kunststoff, welcher an seiner Rückseite Distanzstücke 2 hat, die mit.Abstand zum Grundkörper 1 eine starre Leiterplatte 3 halten. Auf der starren Leiterplatte 3 ist beispielsweise unter anderem ein Zeigerantrieb 4 befestigt, der mit einer Zeigerwelle 5 eine Durchbrechung 6 des Grundkörpers 1 durchdringt. Auf der Vorderseite des Grundkörpers 1 ist auf dieser Zeigerwelle 5 ein Zeiger 7 befestigt.

Der Grundkörper 1 hat an seiner unteren Seite einen quer zu seiner Haupterstreckungsebene verlaufenden Steg 8, der über ein als Filmscharnier ausgebildetes Scharnier 9 mit einen Tragkörper 10 verbunden ist. Dieser Tragkörper 10 erstreckt sich parallel zum Grundkörper 1 und deckt einen die Zeigerwelle 5 und die Durchbrechung 6 umfassenden Bereich des Grundkörpers 1 ab. Auf dem Tragkörper 10 ist beispielsweise eine Flüssigkristallanzeige 11 angeordnet, die dem Fahrer Informationen z. B. eines Fahrzeugnavigationssystems visualisiert. Der Zeiger 7 des erfindungsgemäßen Kombiinstrumentes überstreicht einen ersten Anzeigebereich 15, während die Flüssigkristallanzeige 11 einen zweiten Anzeigebereich 16 bildet.

Wichtig für die Erfindung ist eine flexible Leiterplatte 12, welche sich über die Vorderseite des Grundkörpers 1 und des Tragkörpers 10 erstreckt und die einen definierten Winkel umgebogenen Verbindungsbereich 13 hat, welcher zu der starren Leiterplatte 3 führt und mit ihr durch eine z. B.-Bügellötung 14 verbunden ist. Sowohl der Grundkörper 1 als auch der Tragkörper 10 weisen mehrere konische Körper, beispielsweise 17, 18, auf, welche die flexible Leiterplatte 12 durchdringen und diese dadurch fixieren.

Es ist auch möglich, dass nicht gezeigte Zifferblätter die Lichtkästen auf die flexible Leiterplatte 12 drücken und so die flexible Leiterplatte 12 halten. Die Zifferblätter können beispielsweise am Rand mit dem Grundkörper 1 verrastet sein.

Die Figur 2 zeigt, dass auch auf der flexiblen Leiterplatte 12 Zeigerantriebe 19 mit einer Zeigerwelle 21 angeordnet sein können, die mit Rastfüßen 20 die flexible Leiterplatte 12 und den Grundkörper 1 durchdringen und auf der Rückseite des Grundkörpers 1 verrastet sind. Dadurch halten diese Zeigerantriebe 19 die flexible Leiterplatte 12 auf dem Grundkörper 1. Entsprechend können nicht gezeigte Lichtkästen auf dem Grundkörper 1 oder dem Tragkörper 10 angeordnet und gehalten sein. Es ist auch möglich, daß nicht gezeigte Zifferblätter die Lichtkästen auf die flexible Leiterplatte 12 drücken und so die flexible Leiterplatte 12 halten. Die Zifferblätter können beispielsweise am Rand mit dem Grundkörper 1 verrastet sein. Nicht gezeigt ist in Figur 2, dass der Zeigerantrieb 19 an seiner Unterseite federnde Kontakte aufweist, die federnd auf Leiterbahnen der flexiblen Leiterplatte 12 aufliegen, so dass eine Kontaktierung ohne Lötung erfolgt.

Die Figur 3 zeigt einen Teilbereich des Steges 8 und des über das Scharnier 9 mit ihm verbundenen Tragkörpers 10. Zu erkennen ist, dass der Tragkörper 10 einen Rastkörper 22 hat, der in der zum Steg 8 definierten Stellung des Tragkörpers 10 über eine Raste 23 des Steges 8 geschnappt ist und dadurch den Tragkörper 10 in der dargestellten Winkellage, in der er sich zu dem Grundkörper 1 erstreckt, fixiert.

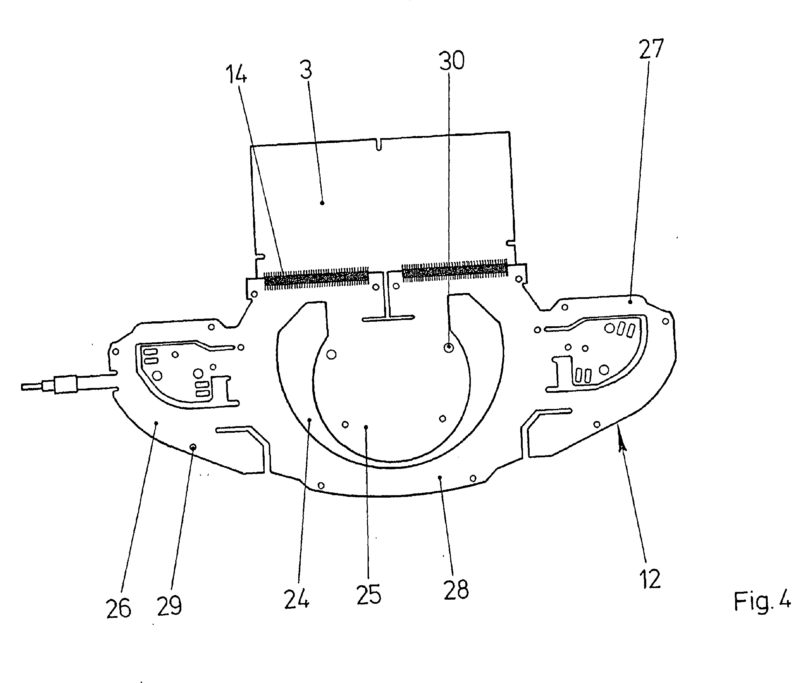

Die Figur 4 verdeutlicht, wie die flexible Leiterplatte 12 durch die z. B. Bügellötung 14 mit der starren Leiterplatte 3 verbunden ist. Weiterhin kennt man einen hufeisenförmigen Ausschnitt 24, durch den ein mittlerer Bereich 25 entsteht, welcher auf dem in den Figuren 1 und 3 gezeigten Tragkörper 10 aufliegt. Hierzu im Gegensatz dienen Randbereiche 26, 27 und ein den Ausschnitt 24 außenseitig umgebenden Bereich 28 dazu, auf dem Grundkörper 1 aufzuliegen. Die flexible Leiterplatte 12 kann sich durch diese Gestaltung optimal unterschiedlichen Winkelausrichtungen und unterschiedlichen Höhenlagen des Grundkörpers 1 und des Tragkörpers 10 anpassen. Ebenfalls zu erkennen sind in der Figur 4 Durchbrechungen 29, 30, durch welche die in Figur 1 gezeigten konischen Körper 17, 18 führen, um die flexible Leiterplatte 12 zu fixieren. Durch Durchbrechungen 31, 32 können die Rastfüße 20 der Zeigerantriebe 19 geführt werden.

## Patentansprüche

1. Kombiinstrument mit einem auf seiner Rückseite eine starre Leiterplatte (3) tragenden Grundkörper (1), welches Anzeigebereiche aufweist, wobei auf der Vorderseite des Grundkörpers (1) eine flexible Leiterplatte (12) angeordnet ist, welche einen in einem definierten Winkel zu einem Randbereich der starren Leiterplatte (3) umgelenkten Verbindungsbereich (13) hat, **dadurch gekennzeichnet, dass** die Anzeigebereiche mit unterschiedlichen Winkeln zueinander verlaufen und von denen zumindest einer gegenüber einem anderen Anzeigebereich ein abweichendes Höhenniveau hat, dass der Grundkörper (1) einen quer zu seiner Haupterstreckungsebene verlaufenden Steg (8) hat, an dessen freiem Ende ein Tragkörper (10) für einen mindestens zweiten Anzeigebereich (16) mittels eines Scharniers (9) befestigt ist, dass die flexible Leiterplatte (12) sich über die Vorderseite des Tragkörpers (10) erstreckt.

2. Kombiinstrument nach Anspruch 1, **dadurch gekennzeichnet, dass** der Verbindungsbereich (13) durch eine Bügellötung (14), eine Leitklebung oder einen Nullkraftstecker mit der starren Leiterplatte (3) verbunden ist.

3. Kombiinstrument nach Anspruch 1, **dadurch gekennzeichnet, daß** die starre Leiterplatte (3) und die flexible Leiterplatte (2) einstückig als starr flexible Leiterplatte ausgeführt sind.

4. Kombiinstrument nach Anspruch 1, **dadurch gekennzeichnet, dass** das Scharnier (9) des Tragkörpers (10) ein Filmscharnier ist.

5. Kombiinstrument nach zumindest einem der vorangehenden Ansprüche, **dadurch gekennzeichnet, dass** an der Rückseite des Tragkörpers (10) zumindest ein quer zu seiner Haupterstreckungsrichtung ausgerichteter Rastkörper (22) angeordnet ist und der Steg (8) zumindest eine Raste (23) zum Verrasten mit dem Rastkörper (22) aufweist, wenn sich der Tragkörper (10) in einer zum Grundkörper (1) definierten Position befindet.

6. Kombiinstrument nach zumindest einem der vorangehenden Ansprüche, **dadurch gekennzeichnet, dass** die flexible Leiterplatte (12) mehrere Durchbrechungen (29, 30) aufweist, durch welche jeweils ein vom Grundkörper (1) oder dem Tragkörper (10) vorspringender konischer Körper (17, 18) ragt.

7. Kombiinstrument nach zumindest einem der vorangehenden Ansprüche, **dadurch gekennzeichnet, dass** auf der flexiblen Leiterplatte (12) Zeigerantriebe (19), Lampen und/oder andere Komponenten angeordnet sind, welche mit Rastfüßen (20) durch die flexible Leiterplatte (12) hindurchgreifen und im Grundkörper (1) oder Tragkörper (10) verrastet sind.

8. Kombiinstrument nach Anspruch 7, **dadurch gekennzeichnet, dass** die Zeigerantriebe (19) und/oder Lampen und/oder andere Komponenten federnde Kontakte aufweisen, welche im montierten Zustand federnd auf Leiterbahnen der flexiblen Leiterplatte (12) aufliegen und die elektrische Verbindung herstellen.

9. Kombiinstrument nach zumindest einem der vorangehenden Ansprüche, **dadurch gekennzeichnet, dass** auf der starren Leiterplatte (3) ein Zeigerantrieb (4) für ein Tachometer oder eine andere Analog-Anzeige angeordnet ist und der Tragkörper (10) im verrasteten Zustand einen den Zeigerantrieb (4) aufweisenden Bereich abdeckt.

10. Kombiinstrument nach zumindest einem der vorangehenden Ansprüche, **dadurch gekennzeichnet, dass** auf dem Tragkörper (10) eine Flüssigkristallanzeige (11) und/oder andere Anzeigen angeordnet sind.

11. Kombiinstrument nach mindestens einem der vorangehenden Ansprüche, **dadurch gekennzeichnet, daß** die elektronische Verbindungstechnik von elektronischen Komponenten räumlich getrennt ist.

## Claims

1. Instrument cluster having a basic body (1) which supports a rigid printed circuit board (3) on its rear side and has display regions, wherein a flexible printed circuit board (12) is arranged on the front side of the basic body (1), said printed circuit board having a connecting region (13) which is deflected by a defined angle with respect to an edge region of the rigid printed circuit board (3), **characterized in that** the display regions run at different angles to one another and at least one of which is at a different level with respect to another display region, **in that** the basic body (1) has a web (8) which runs transversely to its main plane of extent and to whose free end a supporting body (10) for at least one second display region (16) is fastened by means of a hinge (9), **in that** the flexible pointed circuit board (12) extends over the front side of the supporting body (10).

2. Instrument cluster according to Claim 1, **characterized in that** the connecting region (13) is connected to the rigid printed circuit board (3) by bow-type soldering (14), a conductive bond or a zero-force plug.

3. Instrument cluster according to Claim 1, **characterized in that** the rigid printed circuit board (3) and the flexible printed circuit board (12) are of integral design as a rigidly flexible printed circuit board.

4. Instrument cluster according to Claim 1, **characterized in that** the hinge (9) of the supporting body (10) is a film hinge.

5. Instrument cluster according to at least one of the preceding claims, **characterized in that** there is arranged on the rear side of the supporting body (10) at least one latching body (22) aligned transversely to the main direction of extent of said supporting body, and the web (8) has at least one catch (23) for catching to the latching body (22) if the supporting body (10) is in a defined position with respect to the basic body (1).

6. Instrument cluster according to at least one of the preceding claims, **characterized in that** the flexible printed circuit board (12) has a plurality of apertures (29,30) through which a respective conical body (17,18) projecting from the basic body (1) or the supporting body (10) protrudes.

7. Instrument cluster according to at least one of the preceding claims, **characterized in that** there are arranged on the flexible printed circuit board (12) indicator drives (19), lamps and/or other components which grip with latching feet (20) through the flexible printed circuit board (12) and are latched in the basic body (1) or supporting body (10).

8. Instrument cluster according to Claim 7, **characterized in that** the indicator drives (19) and/or lamps and/or other components have resilient contacts which, in the fitted state, rest resiliently on strip conductors of the flexible printed circuit board (12) and produce the electrical connection.

9. Instrument cluster according to at least one of the preceding claims, **characterized in that** an indicator drive (4) for a speedometer or another analog display is arranged on the rigid printed circuit board (3), and the supporting body (10), in the latched state, covers a region having the indicator drive (4).

10. Instrument cluster according to at least one of the preceding claims, **characterized in that** a liquid crystal display (11) and/or other displays is/are arranged on the supporting body (10).

11. Instrument cluster according to at least one of the preceding claims, **characterized in that** the electrical connection system is separated spatially from electronic components.

## Revendications

1. Instrument combiné ayant un corps de base (1) portant, sur Sa face arrière, une carte à circuits imprimés rigide (3) et comportant des zones d'affichage, où une carte à circuits imprimés souple (12) est disposée sur la face avant du corps de base (1) et a une zone de raccordement (13) placée sous un angle défini dans une direction différente à une zone de bordure de la carte à circuits imprimés rigide (3), **caractérisé par le fait que** les zones d'affichage s'étendent sous divers angles l'une par rapport à l'autre et parmi lesquelles au moins l'une est à un niveau de hauteur différent par rapport à une autre zone d'affichage, que le corps de base (1) a une barrette (8) perpendiculaire au plan principal du corps de base et à l'extrémité libre de laquelle est fixé, au moyen d'une charnière (9), un support (10) pour au moins une deuxième zone d'affichage (16), que la carte à circuits imprimés souple (12) s'étend sur la face avant du support (10).

2. Instrument combiné selon la revendication 1, **caractérisé par le fait que** la zone de raccordement (13) est reliée à la carte à circuits imprimés rigide (3) par un brasage en étrier (14), un collage conducteur de l'électricité ou une fiche à force d'insertion nulle.

3. Instrument combiné selon la revendication 1, **caractérisé par le fait que** la carte à circuits imprimés rigide (3) et la carte à circuits imprimés souple (12) sont fabriquées en une seule pièce en tant que carte à circuits imprimés rigide/souple.

4. Instrument combiné selon la revendication 1, **caractérisé par le fait que** la charnière (9) du support (10) est une charnière à membrane.

5. Instrument combiné selon au moins l'une des revendications précédentes, **caractérisé par le fait que**, sur la face arrière du support (10), est disposé au moins un corps d' arrêt (22) dirigé perpendiculairement à la direction principale du support et que la barrette (8) comporte au moins un crochet (23) destiné à s'encliqueter avec le corps d'arrêt (22) lorsque le support (10) se trouve dans une position définie par rapport au corps de base (1).

6. Instrument combiné selon au moins l'une des revendications précédentes, **caractérisé par le fait que** la carte à circuits imprimés souple (12) a plusieurs ouvertures (29, 30) à travers chacune desquelles fait saillie un corps conique (17, 18) dépassant du corps de base (1) ou du support (10).

7. Instrument combiné selon au moins l'une des revendications précédentes, **caractérisé par le fait que**, sur la carte à circuits imprimés souple (12), sont disposés des entraînements d'aiguille (19), des lampes et / ou d'autres composants, qui passent, par des pattes de fixation (20), à travers la carte à circuits imprimés souple (12) et s'encliquettent dans le corps de base (1) ou le support (10).

8. Instrument combiné selon la revendication 7, **caractérisé par le fait que** les entraînements d'aiguille (19), et / ou les lampes et / ou les autres composants ont des contacts élastiques qui, dans l'état assemblé, s'appliquent en faisant ressort sur des pistes conductibles de la carte à circuits imprimés souple (12) et établissent le raccordement électrique.

9. Instrument combiné selon au moins l'une des revendications précédentes, **caractérisé par le fait que**, sur la carte à circuits imprimés rigide (3), est disposé un entraînement d'aiguille (4) pour un tachymètre ou un autre affichage analogique et que le support (10) recouvre, dans l'état encliqueté, une zone comportant l'entraînement d'aiguille (4).

10. Instrument combiné selon au moins l'une des revendications précédentes, **caractérisé par le fait qu'**un affichage à cristaux liquides (11) et/ou d'autres affichages sont installés sur le support (10).

11. Instrument combiné selon au moins l'une des revendications précédentes, **caractérisé par le fait que** la connectique électronique est, dans l'espace, séparée des composants électroniques.
